Europäisches Patentamt

European Patent Office

Office européen des brevets

(11) Publication number: **0 218 332 B1**

# EUROPEAN PATENT SPECIFICATION

(45) Date of publication of patent specification: **16.10.91**

(51) Int. Cl.⁵: **C08J 5/18**, C08L 23/20,
//(C08L23/20,23:20,C08K5:14)

(21) Application number: **86306199.0**

(22) Date of filing: **11.08.86**

(54) Butene-1 polymer blends and films.

(30) Priority: **30.08.85 US 770911**

(43) Date of publication of application:
**15.04.87 Bulletin 87/16**

(45) Publication of the grant of the patent:
**16.10.91 Bulletin 91/42**

(84) Designated Contracting States:
**AT BE CH DE FR GB IT LI LU NL SE**

(56) References cited:
**FR-A- 2 323 751**
**US-A- 4 112 208**
**US-A- 4 230 767**
**US-A- 4 298 722**

(73) Proprietor: **SHELL OIL COMPANY**
**900, Louisiana**
**Houston Texas 77001(US)**

(72) Inventor: **Davison, Sol**
**11919 Pebble Rock Drive**
**Houston Texas 77077(US)**
Inventor: **Hwo, Charles C.**
**2710 Sugarwood Drive**
**Sugarland Texas 77478(US)**

(74) Representative: **Myerscough, Philip Boyd et al**
**J.A.Kemp & Co. 14, South Square Gray's Inn**
**London, WC1R 5EU(GB)**

Rank Xerox (UK) Business Services

## Description

The present invention relates to butene-1 polymer blends and films made from such blends. More particularly, the invention relates to a butene-1 polymer blend having a unique molecular weight distribution which can be used to provide film having a unique combination of good hot tack, low heat sealing temperature and high clarity.

Polybutylene film, as known commercially, has deficiencies in hot tack and processing behavior, as well as clarity. It had been thought that the cause of this unfavorable balance of properties was inherent in the polybutylene itself. However, we have surprisingly found that a polymer blend having a unique molecular weight distribution can be used to provide film of improved hot tack, reduced heat sealing temperature and improved clarity.

Hot tack may be defined as the bonding strength between two pieces of polymer film immediately after their having been joined together by application of heat and while the polymer is in a semi-molten solidifying state. Films are often made into packages which are sealed by applying heat to contacting surfaces. The seal must attain sufficient strength to contain the material within the package. Not only does the weight of packaged material or product contribute to a tendency for seals to release but, in addition, the pressure of air used to assist in transport of the product may exert additional pressure against the seal.

In addition to good hot tack, low heat seal initiation temperature is desired so that a film may be sealed at a relatively low temperature. Commonly used seal layers, such as propylene-ethylene copolymer, melt at a high temperature relative to the main packaging film, i.e. it has a high heat sealing temperature.

In addition, it is important that the film and ultimate package possess high clarity for good "see-through" properties to gain commercial acceptance. Heretofore, butene-1 polymer films for packaging have been deficient in one or more of these desired properties.

Japanese Patent J-53034834 discloses a transparent strong adhesive tape attained by tackifying one surface of biaxially drawn films comprising polymer mixtures containing 20 to 80% by weight of polypropylene and 80 to 20% by weight of polybutylene having a molecular weight of 500 to 20,000, which gives good transparency to the film.

US-A-3,198,779 discloses a process for producing a synthetic hydrocarbon resin which comprises thermally cracking a butene-1 polymer resin with a molecular weight of at least 50,000 and an isotactic content of at least 10% by weight by introducing the butene-1 polymer resin into a thermocracking zone at a temperature from 250 to 450°C under a pressure of from 0.13 Pa to 3.3 kPa (0.001 to 25 mm Hg) and under non-oxidizing conditions and maintaining the butene-1 polymer resin in the zone until the molecular weight of the resulting hydrocarbon resin is within the range of 3,000 to 45,000 and recovering the resin from this cracking zone. The resulting hydrocarbon resins are useful as wax substitutes, they have low molecular weights and the advantage of good solubility in hydrocarbon solvents. The resins are used in the production of coatings resulting in superior flexible coatings which will not crack upon flexure of the substrate to which the coating is applied.

The present invention provides polymer blends comprising (i) a first butene-1 polymer with a melt flow of from 0.5 to 1.0g/10 min (ASTM D1238, Condition E at 190°C) and (ii) a second butene-1 polymer with a melt flow from 150 to 250g/10 min obtained by chemical degradation using a free radical initiator, the weight proportion (i):(ii) being from 70:30 to 95:5.

The invention also provides polymer blends comprising (i) a first butene-1 polymer with a melt flow of from 0.5 to 1.0g/10 min, (ii) a second butene-1 polymer with a melt flow from 150 to 250g/10 min obtained by chemical degradation using a free radical initiator, and (iii) a propylene polymer with a melt flow of 0.5 to 5. 0g/10 min, the weight proportion (i):(ii):(iii) being from 75:10:15 to 45:25:30.

The blend of (i) and (ii) is most conveniently made by chemical degradation (also known as chemical cracking or random scission by chemical means) of a portion of a reactor butene-1 polymer and blending back the cracked portion with the original parent reactor polymer. The resulting blends have been shown to possess a unique molecular weight distribution not present in either the pure uncracked or cracked polymers, such unique molecular weight distribution manifesting itself in unusual combinations of processing behavior and physical properties of film fabricated from the blend.

The blends of the invention are based on the ability of butene-1 polymers to undergo random scission of molecules in a chemical cracking process. Such cracked polymer when blended with an uncracked butene-1 polymer produces a unique and valuable combination of processing behavior and mechanical, optical and thermal properties of film made from the blend. Good hot tack, low heat sealing temperature and high clarity as well as improved processibility are simultaneously achieved in these films. Heretofore it has been thought that achieving this combination of properties in butene-1 polymers was impossible due to their inherent nature. We have surprisingly discovered that the blends of the invention, although still retaining the chemical nature of butene-1 polymers, achieve this desirable combination of properties by a significant modification of the molecular weight distribution from that of normally manufactured butene-1 polymers.

The butene-1 polymers that are employed in accordance with the invention are butene-1 homopolymers or copolymers of butene-1 with at least one copolymerisable monomer. Preferred copolymers contain ethylene or propylene as comonomer.

Those blends of the invention containing only the butene-1 polymers (i) and (ii) which are preferred are those wherein the melt flow of (i) is about 0.7g/10 min, the melt flow of (ii) is about 200, and the weight proportion (i): (ii) is from 75:25 to 90:10, especially about 85:15. Such blends preferably have a melt flow of 2 to 25, especially 8 to 15, g/10 min.

In the case of blends containing not only the butene-1 polymers (i) and (ii) but also the propylene polymer (iii), those which are preferred are those wherein the melt flow of (i) is about 0. 7g/l0 min, the melt flow of (ii) is about 200g/10 min, and the weight proportion of (i):(ii):(iii) is from 65:15:20 to 55:20:25, especially about 60:17.5:22.5. These blends preferably have a melt flow of 2 to 5, especially about 2.5,g/10 min.

The second butene-1 polymer (ii) is obtained by chemical degradation of a higher molecular weight butene-1 polymer, preferably the first butene-1 polymer (i).

Polybutylene-1 when subjected to certain chemical agents, namely free radical initiators such as peroxides, under appropriate conditions undergoes a special type of degradation, sometimes known as cracking, which involves random scission of the polymer molecules. The process is comparable to that undergone by other polymers, particularly polypropylene. A basic concept of accomplishing such degradation by utilizing peroxides is described in US-A-3,144,436, where a free radical initiator is introduced into a polymer melt in the absence of oxygen in a screw extruder. US-A-3,940,379 discloses a method for the degradation of propylene polymers to increase their melt flow rate which comprises contacting a propylene polymer with oxygen and an organic or inorganic peroxide, melting and working the resulting mixture in a high shear zone, and recovering an essentially odor-free propylene polymer. US-A-4,061,694 discloses the manufacture of propylene polymer molding compositions of improved impact strength by subjecting block copolymers of ethylene and propylene to controlled oxidative degradation under conditions essentially similar to those of US-A-3940379. Other documents dealing with the degradation of propylene polymers include US-A-4,375,531; US-A-3,862,265; US-A-3,887,534; US-A-3,898,209; US-A-4,001,172; US-A-4,087,486; US-A-4,359,495; US-A-4,378,451 and US-A-4,387,185.

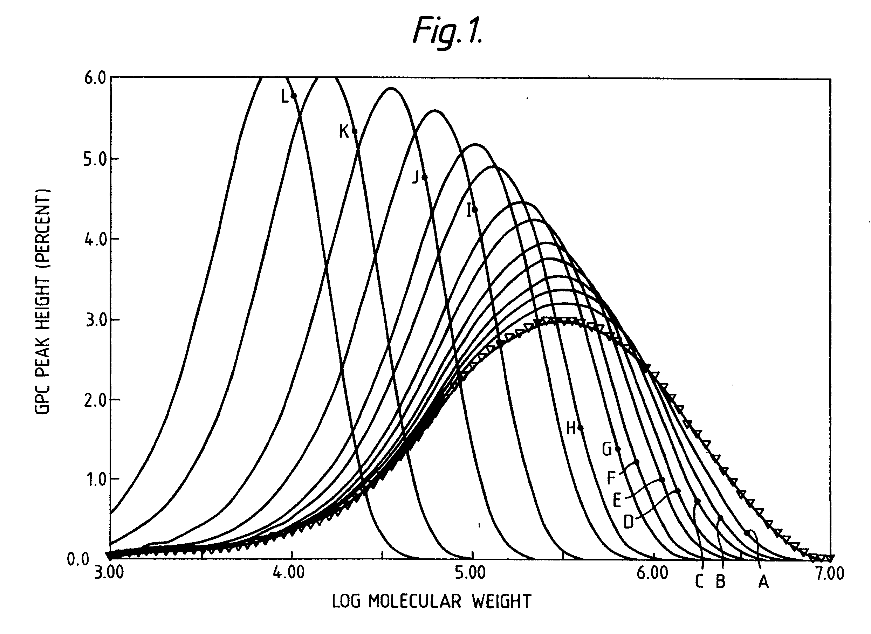

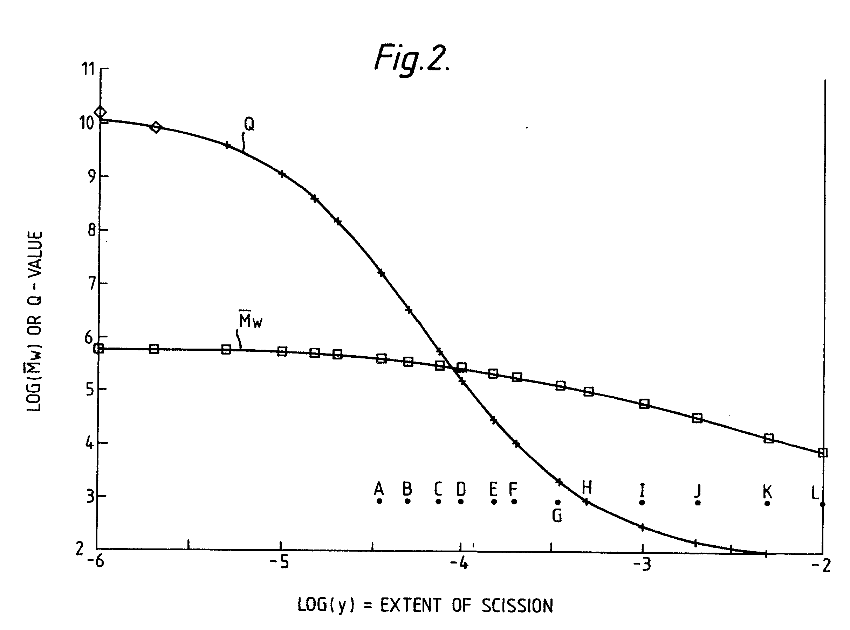

The extent of random scission is governed by the amount of chemical agent present. Figure 1 shows (as the bottom curve) the molecular weight distribution (MWD) of a reactor butene-1 polymer (PB 8A) having a melt index of 0.84 dg/min. Also shown are the MWD's of the degraded products obtained by degrading the reactor polybutene-1 over a wide range of cracking levels, from low to high (curves marked A to L). The plots are in the gel permeation chromatography (GPC) format where equal areas represent equal weights of polymer independent of the location of an area on the figure and all plots have been normalized to enclose equal total areas. Thus certain important features of the MWD changes occurring with the cracking process may be easily seen. Thus, with increasing cracking of the reactor polybutene-1 (1) the high molecular weight tail is progressively lost; (2) the peak is shifted to lower molecular weights and becomes progressively higher and narrower; and (3) at low or moderate degrees of cracking (curves A to H) there is very little build-up in the low molecular tail, but this becomes appreciable at high degrees of cracking (curves I to L). Figure 2 shows the corresponding plots of logarithm of the molecular weight average (weight average, $\overline{M}w$) and the Q-value (ratio of $\overline{M}w$ to the number molecular weight average, $\overline{M}n$) for the cracked products A to L. The Q-value is a measure of the breadth of the MWD, and it can be seen that progressive cracking of the reactor polybutene-1 both reduces $\overline{M}w$ and narrows the MWD.

A cracked product corresponding to curve H was selected for blending with the parent reactor polybutene-1. It is seen from Figure 1 that H has totally lost the high molecular weight tail above one million MW, whereas it has not appreciably increased its low molecular weight tail. Overall, it has increased it MWD in the mid-range, with an appreciable shift in peak location to lower MW. H shows a melt index of over 200 dg/min compared to that of the parent polybutene-1 of 0.84 dg/min. From Figure 2, it is seen that $\overline{M}w$ and Q of H are 136,000 and 3.32 compared to 622,000 and 10.20 respectively, of the parent polymer.

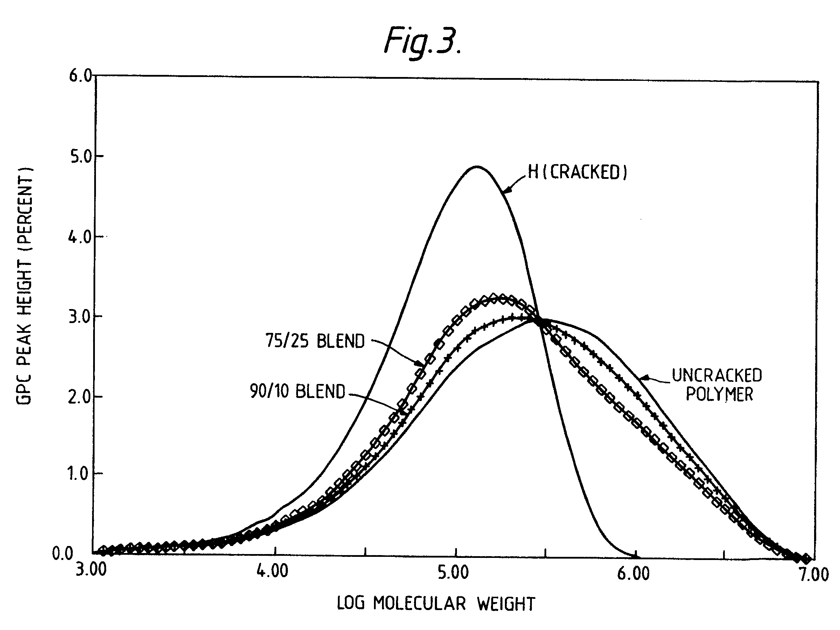

Figure 3 reproduces the MWD's of H and the parent polybutene-1 and, in addition, the MWD's of two blends made from these components; a 90/10 blend (parent polymer/H) and a 75/25 blend by weight, embodiment of the blends of this invention. it is seen that the MWD's of the blends are uniquely different from those of the components and this difference works most advantageously. The retention of most of the original high molecular tail of the parent polymer preserves the good film mechanical properties of polybutene-1, at the same time retaining the melt elasticity required for melt strength. Furthermore, melt viscosity is reduced by the peak shift to lower values, and also the relative increase in free molecular ends improves self-adhesion (hot tack) and heat sealing properties because of improved molecular mobility across the interface of contacted services. Clarity is most likely improved by the increased molecular mobility reducing the number of light scattering defects in the surface as well as in the interior of the film. On the other hand, this improvement of molecular mobility does not depend on an increase in low molecular weight tail, as evidenced by Figure 3, so that the deleterious influence of such excessive tail on mechanical properties and solubility is absent in these blends.

The invention also provides films of the polymer blends of the components (i) and (ii), or (i), (ii) and (iii). The invention further provides a laminate comprising a propylene polymer (homo- or co-polymer) or blend as a substrate or core layer and a film of a polymer blend of components (i), (ii) and (iii) on one or both surfaces thereof. Such laminates have improved hot tack, low heat-sealing temperature and high clarity.

Experiment 1

Chemical degradation experiments were carried out to determine the proportion of peroxide concentrate (PC) to butene-1 polymer (PB) in order to attain a "super high" melt flow of 200g/10 min. PC is composed of 4.6% LUPERSOL® 101XL (Lucidol, a Division of Pennwalt Corp) in LDPE (low density polyethylene) and LUPERSOL 101XL is about 50% LUPERSOL® 101 peroxide absorbed on inert filler.

Extrusion on a 1.9 cm (3/4 inch) CW Brabender extruder was done at conditions of 160 RPM, 150°C (Zone 1) and 170°C (Zones 2 to 4). A butene-1 homopolymer (BR 24) was chemically degraded by extrusion at peroxide concentrate levels of 0.1, 0.5, 1, 2, 3, 4, 5, 6, 7, 8, 9, 12 and 15% by weight. The extruded strands were manually collected after passing through a bath and conditioned overnight at room temperature and pelletized the following day.

A butene-1 polymer (PB 8A), a second material, was then chemically degraded by extrusion. Peroxide concentrate levels of 3, 6, 12 and 15% by weight were used and even more effective stranding was achieved by an extended water bath, namely, a cooling bath with dry ice, and then passing the extruded strand out of the bath into the air and back into the bath before final pelletization. Undegraded PB 8A was melt mixed with degraded PB 8A at 3, 6, 12 and 15% PC at 90:10 and 75:25 blending ratios.

Blended undegraded to degraded PB at ratios of 90:10 and 75:25 were compared. Heat seal as well as processability was significantly improved in the blends as compared to the undegraded PB.

Experiment 2

PC at 3, 6, 12 and 15% by weight levels was used to chemically degrade PB 8A. Table 1 shows that the melt flow in excess of 200g/10 min was attained when PB 8A was chemically degraded at 15% PC levels. Blends with undegraded to degraded PB at ratios of 90:10 and 75:25 are melt blended via 1.9 cm (3/4 inch) Brabender extruder with conditions of 150°C starting temperature, 170°C die temperature with an extruder RPM of 160.

Film casting was done through a 3.2 cm (1.25 inch) Brabender extruder with variable adjustment and Killion die. Operating conditions for all blends were 200°C (Zone 1), 220°C (Zones 2 to 5). Chill roll temperature was 16°C whereas extruder, chill and take-up roll RPM were 8, 18 and 18. The film thickness produced was 38 μm (1.5 mils) except for material blend 13 shown in Table 1, which 51 μm (2 mils). The film thickness was adjusted to 38 μm (1.5 mils) by reducing the extruder RPM from 8 to 6. All of the conditions were maintained. The film clarity was greatly improved in the 75:25 (15% PC) blend.

Experiment 3 - Hot Tack

Cast films were tested for self-adhesion through a heated band sealer at 0.14 MPa at (20 psi) sealing pressure. At a water pressure of 25.4 cm (10 inches), hot tack was rated at varying sealing temperatures and dwelling time. Table 2 categorizes the rating into "passed" and "failure". Self-adhesion on film was considered "passed" if the seal did not split apart along a length greater than 0.3 cm of the sealed opening at a specified height of water. Interestingly enough, all the blended PB materials at 2 seconds dwelling time and 38 cm (15 inches) of water "passed" at 107 to 113°C (225°F to 235°F) since the pure PB 8A (undegraded version) failed in a similar test.

Experiment 4 - Tensile Strength

Tensile strength of extrusion cast films was investigated in both machine and transverse direction. Table 3 shows the tensile properties tested at room temperature. Blends of chemically degraded and undegraded PB showed lower yield and break, with higher elongation at break (%) relative to pure uncracked PB 8A along the machine direction.

Experiment 5 - Film Sealability

In another test, RT tensile film seals, of 5 materials (blend numbers 1, 8, 9, 12 and 13) 4 peeled apart at less than 0.45 kg (1 pound) yield load. Only material blend 13 (75:25 containing chemically degraded component with 15% PC) survived a much higher load.

Table 4 provides a comparison of the sealability of the blend versus a conventional blend for polypropylene coatings. Hot tack strength is shown in cm (inches) of water based on 25 μm (1 mil) cast film with sealing conditions: 0.28 MPa (40 psi) pressure, 2 second dwell time and two-sided heated. Sealing temperature ranges were from 71 to 104°C (160°F to 220°F). The blend compositions were of approximately the same melt flows, two being standard polybutylene/polypropylene blends and the third a unique molecular weight distribution blend of a polybutylene (i), a chemically degraded polybutylene (ii) and a polypropylene (iii). As can be seen, the unique molecular weight distribution blend has resulted in super clear optics and a hot tack strength of 380 cm (15 inches) consistently from 71 to 104°C (160°F to 220°F). In addition, the seal strength of the unique molecular weight distribution blend at 82°C(180°F) or greater is more acceptable than that of the first two conventional blends, so that the unique molecular weight distribution blend results in excellent hots tack strength and good seal strength while having excellent clarity.

(The polymers referred to herein as PB 8A, PB 8B, BR 2A, PP 5A and PP 5B are all commercially available polymers, namely Shell "DURAFLEX" PB 8640 Copolymer, Shell "DURAFLEX" PB 8240 Copolymer, Shell "DURAFLEX" BR 200 Homopolymer, Shell Polypropylene PP 5820 Homopolymer and Shell Polypropylene PP 5520, respectively.)

### TABLE 1

| | Material Blend No. | %PC Peroxide Concentrate[b] | Melt Flow[a] (g/10min) |
|---|---|---|---|
| A) Uncracked PB 8A | 1 | 0 | 0.7 |
| B) Cracked PB 8A | 2 | 3 | 21.6 |
| | 3 | 6 | 62.8 |
| | 4 | 12 | 157.4 |
| | 5 | 15 | 208.8 |
| C) Blended Uncracked to Cracked | | | |
| 1. 90/10 Blend Ratio | 6 | 3 | 1.1 |
| | 7 | 6 | 1.4 |
| | 8 | 12 | 2.9 |
| | 9 | 15 | 4.1 |
| 2. 75/25 Blend Ratio | 10 | 3 | 2.1 |
| | 11 | 6 | 5.3 |
| | 12 | 12 | 13.9 |
| | 13 | 15 | 20.2 |

a) Melt Flow is based on ASTM D1238, Condition "E" at 190°C.

b) Relative to cracked component.

## TABLE 2

| | | 380 cm (15 inches) of $H_2O$ | | | 25.4 cm (10 inches) of $H_2O$ | | |
|---|---|---|---|---|---|---|---|
| Sealing Temp. °C (°F) | Seal Dwelling Time (Secs) | Uncracked PB 8A | Uncracked to cracked Blend Ratio 90:10 | 75:25 | Uncracked PB 8A | Uncracked to cracked Blend Ratio 90:10 | 75:25 |
| 116 (240) | 1 | Passed | Excessive | Softening | - - | - - | - - |
| 113 (235) | 1 | Failed | Passed | Passed | Passed | Passed | Passed |
| | 2 | Failed | Passed | Passed | Passed | Passed | Passed |
| 110 (230) | 1 | Failed | Passed | Passed | Failed | Passed | Passed |
| | 2 | Failed | Passed | Passed | Failed | Passed | Passed |
| 107 (225) | 1 | Failed | Failed | Failed | Failed | Passed* | Failed |
| | 2 | Failed | Passed | Passed | Failed | Passed* | Failed |

\* Seal opened up slightly

Sealing Pressure = 0.14 MPa (20 psi).
Calibrating $H_2O$ Pressure = 0.25 cm (0.10 inch)
Passed = the seal did not split apart along a length greater than 0.3 cm of the seal opening at a specified height (cm) of water.

## TABLE 3

| | % Peroxide Concentrate [a] | Machine Direction | | | Transverse Direction | | |
|---|---|---|---|---|---|---|---|
| | | Tensile Strength | | Elongation at break | Tensile Strength | | Elongation at break |
| | | Yield MPa (psi) | Break MPa (psi) | % | Yield MPa (psi) | Break MPa (psi) | % |
| A. Uncracked PB 8A | 0 | 16.8 (2440) | 58.6 (8500) | 218 | 13.0 (1880) | 26.0 (3770) | 355 |
| B. Blended (Uncracked to Cracked) | | | | | | | |
| 1. 90:10 Blend Ratio | 12 | 13.2 (1910) | 33.9 (4910) | 319 | 12.8 (1860) | 30.3 (4390) | 319 |
| 2. 90:10 Blend Ratio | 15 | 14.3 (2070) | 36.0 (5220) | 320 | 13.0 (1890) | 28.3 (4100) | 299 |
| 3. 75:25 Blend Ratio | 12 | 14.5 (2100) | 31.8 (4610) | 319 | 12.1 (1760) | 24.3 (3530) | 292 |
| 4. 75:25 Blend Ratio | 15 | 15.7 (2270) | 29.5 (4280) | 305 | 12.9 (1870) | 26.2 (3800) | 323 |

a) Relative to cracked component

EP 0 218 332 B1

## TABLE 4

| BLEND COMPOSITION AND OPTICAL PROPERTIES | MELT FLOW, dg/min ** | HOT TACK STRENGTH, cm OF H$_2$O * (SEAL STRENGTH, G/2.54 cm) SEALING TEMPERATURE, °C (°F) | | | | |
|---|---|---|---|---|---|---|
| | | 71 (160) | 77 (170) | 82 (180) | 93 (200) | 104 (220) |
| PB 8B/PP 5A (75/25), HAZY | 2.7 | - - (-) | 380 (66) | 380 (509) | 380 (940) | 380 (1817) |
| PB 8B/PP 5B (75/25), HAZY | 2.0 | 380 (54) | - - (-) | 380 (563) | 380 (1212) | 380 (1553) |
| UNIQUE MWD BLEND, PB 8A (PB 8A + CHEM. DEG. PB 8A)/PP 5B (75/25), SUPER CLEAR | 2.5 | - (-) | 380 (129) | 380 (893) | 380 (1143) | 380 (1116) |

* Based on 25 μm (1 mil) cast film with sealing conditions: 0.28 MPa (40 psi) pressure, 2 second dwell time and two-sided heated.

** Melt flow (MF) is based on ASTM D1238 condition "E" at 190°C.

## Claims

1. A polymer blend comprising (i) a first butene-1 polymer with a melt flow of from 0.5 to 1.0g/10 min (ASTM D1238, Condition E at 190°C) and (ii) a second butene-1 polymer with a melt flow from 150 to 250g/10 min obtained by chemical degradation using a free radical initiator, the weight proportion (i):(ii) being from 70:30 to 95:5.

8

2. A polymer blend according to claim 1, wherein (i) and/or (ii) contains ethylene or propylene as a comonomer.

3. A polymer blend according to claim 1 or 2, wherein the melt flow of (i) is about 0. 7g/10 min, the melt flow of (ii) is about 200, and the weight proportion (i):(ii) is from 75:25 to 90:10.

4. A polymer blend according to claim 1, 2 or 3 wherein the weight proportion of (i):(ii) is about 85:15.

5. A polymer blend according to any one of claims 1 to 4 which has a melt flow of 2 to 25g/10 min.

6. A polymer blend according to olaim 5 wherein the melt flow is 8 to 15g/10 min.

7. A polymer blend comprising (i) a first butene-1 polymer with a melt flow of from 0.5 to 1.0g/10 min, (ii) a second butene-1 polymer with a melt flow from 150 to 250g/10 min obtained by chemical degradation using a free radical initiator, and (iii) a propylene polymer with a melt flow of 0.5 to 5.0g/10 min, the weight proportion (i):(ii):(iii) being from 75:10:15 to 45:25:30.

8. A polymer blend according to claim 7, wherein (i) and/or (ii) contains ethylene or propylene as a comonomer.

9. A polymer blend according to claim 7 or 8, wherein the melt flow of (i) is about 0. 7g/10 min, the melt flow of (ii) is about 200g/10 min, and the weight proportion of (i):(ii):(iii) is from 65:15:20 to 55:20:25.

10. A polymer blend according to claim 7, 8 or 9, wherein the weight proportion of (i):(ii):(iii) is about 60:17.5:22.5.

11. A polymer blend according to any one of claims 7 to 10 which has a melt flow of from 2 to 5g/10 min, preferably about 2.5g/10 min.

12. A film of a polymer blend as claimed in any one of the preceding claims.

13. A laminate comprising a film of a propylene polymer or blend as a substrate or core layer and a film of a polymer blend as claimed in any one of claims 7 to 11 on one or both surfaces thereof.

**Revendications**

1. Mélange polymère comprenant (i) un premier polymère de butène-1 ayant un indice de fluidité à l'état fondu de 0,5 à 1,0 g/10 min (ASTM D1238, condition E à 190°C) et (ii) un deuxième polymère de butène-1 ayant un indice de fluidité à l'état fondu de 150 à 250 g/10 min, obtenu par dégradation chimique réalisée au moyen d'un composé générateur de radicaux libres, la proportion en poids (i):(ii) étant de 70:30 à 95:5.

2. Mélange polymère selon la revendication 1, dans lequel (i) et/ou (ii) contient l'éthylène ou le propylène comme comonomère.

3. Mélange polymère selon la revendication 1 ou 2, pour lequel l'indice de fluidité à l'état fondu de (i) est d'environ 0.7 g/10 min, l'indice de fluidité à l'état fondu de (ii) est d'environ 200 g/10 min et la proportion en poids (i):(ii) est de 75:25 à 90:10.

4. Mélange polymère selon la revendication 1, 2 ou 3, dans lequel la proportion en poids (i):(ii) est d'environ 85:15.

5. Mélange polymère selon l'une quelconque des revendications 1 à 4, ayant un indice de fluidité à l'état fondu de 2 à 25 g/10 min.

6. Mélange polymère selon la revendication 5, pour lequel le indice de fluidité à l'état fondu est de 8 à 15 g/10 min.

7. Mélange polymère comprenant (i) un premier polymère de butène-1 ayant un indice de fluidité à l'état fondu de 0,5 à 1,0 g/10 min, (ii) un deuxième polymère de butène-1 ayant un indice de fluidité à l'état fondu de 150 à 250 g/10 min, obtenu par dégradation chimique réalisée au moyen d'un composé générateur de radicaux libres et (iii) un polymère de propylène ayant un indice de fluidité à l'état fondu de 0,5 à 5,0 g/10 min, la proportion en poids (i):(ii):(iii) étant de 75:10:15 à 45:25:30.

8. Mélange polymère selon la revendication 7, dans lequel (i) et/ou (ii) contient l'éthylène ou le propylène comme oomonomère.

9. Mélange polymère selon la revendication 7 ou 8, pour lequel l'indice de fluidité à l'état fondu de (i) est d'environ 0,7 g/10 min, l'indice de fluidité à l'état fondu de (ii) est d'environ 200 g/10 min et la proportion en poids (i):(ii):(iii) est de 65:15:20 à 55:20:25.

10. Mélange polymère selon la revendication 7, 8 ou 9, dans lequel la proportion en poids (i):(ii):(iii) est d'environ 60:17,5:22,5.

11. Mélange polymère selon l'une quelconque des revendications 7 à 10, ayant un indice de fluidité à l'état fondu de 2 à 5 g/10 min, de préférence environ 2,5 g/10 min.

12. Film d'un mélange polymère tel que revendiqué dans l'une quelconque des revendications précédentes.

13. Stratifié comprenant un film d'un polymère de propylène ou d'un mélange de celui-ci comme substrat ou couche centrale et un film d'un mélange polymère, tel que revendiqué dans l'une quelconque des revendications 7 à 11, sur une ou les deux surface(s) du substrat.

## Patentansprüche

1. Polymermischung enthaltend (i) ein erstes Buten-1 Polymer mit einem Schmelzindex von 0,5 bis 1,0 g/10 min (ASTM D1238, E bei 190°C) und (ii) ein zweites Buten-1 Polymer mit einem Schmelzindex von 150 bis 250 g/10 min, erhalten durch chemischen Abbau mit Hilfe eines Inititatos für freie Radikale, wobei das Gewichtsverhältnis (i):ii) zwischen 70:30 und 95:5 liegt.

2. Polymermischung nach Anspruch 1, worin (i)und/oder (ii) als Comonomere Ethylen oder Propylen enthält (enthalten>.

3. Polymermischung nach Anspruch 1 oder 2, wobei der Schmelzindex von (i) etwa 0,7 g/10 min und der Schmelzindex von (ii) etwa 200 beträgt und das Gewichtsverhältnis (i):(ii) zwischen 75:25 und 90:10 liegt.

4. Polymermischung nach Anspruch 1, 2 oder 3, wobei der Gewichtsanteil von (i):(ii) entwa 85:15 beträgt.

5. Polymermischung nach einem der Ansprüche 1 bis 4, wobei der Schmelzindex 2 bis 25 g/10 min beträgt.

6. Polymermischung nach Anspruch 5, wobei der Schmelzindex 8 bis 15 g/10 min beträgt.

7. Polymermischung aus (i) einem ersten Buten-1 Polymer mit einem Schmelzindex von 0,5 bis 1,0 g/10 min, (ii) einen zweiten Buten-1 Polymer mit einem Schmelzindex von 150 bis 250 g/10 min, erhalten durch chemischen Abbau unter Verwendung eines Initiators für freie Radikale und (iii) ein Propylenpolymer mit einem Schmelzindex von 0,5 bis 5,0 g/10 min, wobei das Gewichtsverhältnis (i):(ii):(iii) je zwischen 75:10:15 und 45:25:30 liegt.

8. Polymermischung nach Anspruch 7, wobei (i) und/oder (ii) als Comonomeres Ethylen oder Propylen enthält (enthalten).

9. Polymermischung nach Anspruch 7 oder 8, wobei der Schmelzindex von (i) etwa 0,7 g/10 min, der Schmelzindex von (ii) etwa 200 g/10 min und das Gewichtsverhältnis (i):(ii):(iii) 65:15:20 bis 55:20:25 beträgt.

10. Polymermischung nach Anspruch 7, 8 oder 9, wobei das Gewichtsverhältnis von (i):(ii):(iii) etwa 60:17,5:22,5 beträgt.

11. Polymermischúng nach einem der Ansprüche 7 bis 10, wobei ein Schmelzindex von 2 bis 5 g/10 min, vorzugsweise etwa 2,5 g/10 min, vorliegt.

12. Folie aus einer polymermischung entsprechend einem der vorhergehenden Ansprüche.

13. Laminat bestehend aus einer Folie eines Propylenpolymeren oder eines Gemisches als Substrat oder Kernschicht und einer Folie einer Polymermischung entsprechend einem der Ansprüche 7 bis 11 auf einer oder beiden Flächen.

Fig.1.

Fig.2.

EP 0 218 332 B1

Fig.3.

EP 0 218 332 B1